# EUROPÄISCHE PATENTSCHRIFT

(11) **EP 0 435 123 B1**
(45) Veröffentlichungstag und Bekanntmachung des Hinweises auf die Patenterteilung: **30.11.1994**
(21) Anmeldenummer: 90124399.8
(22) Anmeldetag: 17.12.1990
(51) Int. Cl.: H02B 13/025

(54) **Schalt- oder Abgangskasten, insbesondere zur Verwendung auf Schienenverteilern von Niederspannungs-Schaltanlagen**
Switch or outlet box especially for use on the distributing bus bars of low voltage switch gear
Coffret électrique ou de départ en particulier destiné aux répartiteurs de barres omnibus d'installation de commutation basse tension

(30) Priorität: 21.12.1989 DE 3942274
(43) Veröffentlichungstag der Anmeldung: 03.07.1991
(73) Patentinhaber: Klöckner-Moeller GmbH, 53115 Bonn (DE)
(72) Erfinder: Müller, Reinhard, Dipl.-Ing., D-5040 Brühl (DE)

(56) Entgegenhaltungen:
- EP-A- 0 168 310
- DE-A- 2 951 829
- DE-A- 3 411 643

## Beschreibung

Die Erfindung betrifft einen Schalt- oder Abgangskasten nach dem Oberbegriff des Anspruchs 1, der insbesondere zur Verwendung auf Schienenverteilern von Niederspannungs-Schaltanlagen bestimmt ist.

Bei derartigen Schalt- oder Abgangskästen können Störlichtbögen auftreten, die in wenigen Millisekunden zu einem hohen Druckanstieg führen und durch unkontrolliert berstende Abdeckungen das Bedienungspersonal gefährden.

Zum Schutze des Bedienungspersonals und auch der Schalteinrichtungen vor schädlichen Lichtbogeneinflüssen ist es bekannt (EP-PS 0 168 310), das Metallgehäuse solcher Schalt- oder Abgangskästen durch eine Trennwand in einen Geräteraum und in einen Anschlußraum mit den Anschlußschienen für den Anschluß von Verbrauchern zu unterteilen und eine parallel zur Trennwand verlaufende Druckentlastungswand vorzusehen, die im Falle eines Lichtbogens aufgebogen wird, oder auch Druckentlastungsklappen anzubringen, die eine schnelle Druckentlastung des jeweiligen Geräte- oder Anschlußraumes ermöglichen sollen.

So ist es bekannt (AT-PS 378 631), Druckentlastungsklappen mittels handelsüblicher Scharniere oder Scharnierbänder mit einer Blechplatte oder einem Profilrahmen des Gehäuses solcher Schalt- oder Abgangskästen gelenkig zu verbinden. Solche Ausführungen sind jedoch insbesondere bei der Montage relativ aufwendig und dadurch teuer. Außerdem besteht bei dem durch einen Störlichtbogen bewirkten plötzlichen Druckanstieg innerhalb von Millisekunden die Gefahr, daß sich die Druckentlastungsklappen aufwölben und dadurch die Öffnungsbewegung um die Scharniere oder Scharnierbänder in hohem Maße beeinträchtigt wird.

Zur Vereinfachung der Lagerung von Druckentlastungsklappen (AT-PS 378 631) hat man auch schon auf Gelenke verzichtet und die Schwenkbarkeit der Druckentlastungsklappen beispielsweise durch Ausbiegen erreicht, was aber auch insofern unbefriedigend ist, als das Aufbiegen solcher Druckentlastungswände beim Auftreten von Störlichtbögen nicht schnell genug erfolgt und dadurch zu starken unerwünschten Verformungen am Gehäuse und unkontrollierten Ausblasungen von ionisierten Gasen ebenso wie zu Zerstörungen an den Geräten im Geräteraum führt.

Bekannt ist ebenfalls die Druckentlastungswand mit einer Perforation zum Zwecke des abreißens zu versehen, wie in der DE-PS 34 11 643 beschrieben ist.

Eine andere Druckentlastungswand, die auch eine Perforation aufweisen kann, ist in der DE-OS 29 51 829, Fig. 8 gezeigt. Bei den oben zittierten Stand der Technik besteht die Gefahr, daß Teile der Druckentlastungswand durch die Perforation vollständig abreißen können. Dies ist, insbesondere bei der Verwendung auf Schienenverteilern, unerwünscht.

Weiterhin ist bekannt zwei Druckentlastungsklappen einzusetzen, deren Biegekanten auf gegenübeliegenden Seiten dieser Wand angeordnet sind, wie in der DE-GM 87 06 058 und DE-GM 75 09 085 dagestellt sind.

Der Erfindung liegt die Aufgabe zugrunde, Schalt- oder Abgangskästen nach dem Oberbegriff des Anspruches 1, dahingehend zu verbessern, daß die Druckentlastungswand bereits unmittelbar nach dem Auftreten eines Störlichtbogens innerhalb weniger Millisekunden reagiert, um den davon betroffenen Gehäuseraum schlagartig von dem auftretenden Innendruck zu entlasten, ohne daß das Gehäuse selbst oder die darin befindlichen Geräte einen Schaden davontragen, und ohne daß die Druckentlastungsklappen abreißen.

Diese Aufgabe wird erfindungsgemäß durch das Kennzeichen des Anspruches 1 gelöst, während in den Ansprüchen 2 bis 10 besonders vorteilhafte Weiterbildungen der Erfindung gekennzeichnet sind.

Dadurch, daß jede Druckentlastungsklappe mit einer um 90° abgewinkelten Befestigungsleiste an der jeweils anschließenden Gehäuseseitenwand befestigt ist, ergibt sich der Vorteil, daß bei einem plötzlichen Druckanstieg infolge eines Störlichtbogens im Geräteraum der gesamte Innendruck voll und gleichmäßig auf beide Druckentlastungsklappen einwirkt, d.h. der volle Gehäusequerschnitt wirksam ist, um diese innerhalb von Millisekunden nach außen zu schleudern, wobei die an den Biegekasten zwischen den Druckentlastungsklappen und deren Befestigungsleisten vorhandenen Perforationen als Schwächungszonen einerseits die leichte Öffnungsbewegung der beiden Druckentlastungsklappen begünstigen und zum anderen in Verbindung mit den Befestigungsleisten an den Gehäuseseitenwänden auch verhindern, daß sich die Seitenwände des Metallgehäuses nach außen aufwölben.

Weiterhin ergibt sich der Vorteil, daß die Klappen geöffnet werden, ohne daß diese abreißen können. Dies wird insbesondere dadurch erreicht, daß die Perforationen an den Gehäusekanten angeordnet sind, und daß die Befestigungsleisten um 90° abgewinkelt sind. Letzteres ist dadurch zu erklären, daß dieser Winkel bei der Öffnung erst druchlaufen werden muß bevor die Befestigungsleiste und die Druckentlastungsklappe in einer Linie stehen.

Durch die metallisch blanke bzw. elektrisch leitende Innenseite der Druckentlastungsklappen wird erreicht, daß der Störlichtbogen in Richtung auf die Druckentlastungsklappen gelenkt wird und somit der Hauptdruck auf die Klappen einwirkt. Dies erweist sich besonders günstig für eine gerichtete Ausblasung der Druckgase und für ein schnelles Öffnen der Druckentlastungsklappen.

Besonders vorteilhaft für ein schnelles Öffnen wirkt sich weiterhin das Merkmal des Anspruches 2 aus, durch das eine geringe Masse der Druckentlastungswand erreicht wird, so daß sich die Öffnungsgeschwindigkeit der Druckentlastungsklappen erhöht.

Zur schlagartigen gleichzeitigen Öffnung beider Druckentlastungsklappen trägt außerdem bei, daß lediglich eine der beiden Druckentlastungsklappen mittels einer Haltezunge am Gehäuse des Schalt- oder Abgangskastens gesichert ist, während die zweite Druckentlastungsklappe sich nur randseitig an der ersten Druckentlastungsklappe abstützt, wie aus Anspruch 2 hervorgeht. Die Sicherung nur einer Druckentlastungsklappe durch die Haltezunge am Gehäuse hat auch den Vorteil, daß eine solche Haltezunge hinsichltich ihrer Biegeeigenschaften genau bemessen werden kann.

Für eine genau definierte Öffnungsbewegung der beiden Druckentlastungsklappen ist es auch von Vorteil, daß die Druckentlastungsklappen mit an ihren Längskanten parallel zueinander abgewinkelten oberen und unteren Haltstegen in oberen und unteren seitlichen Führungstaschen oder Führungsschlitzen am Gehäuse des Schalt- oder Abgangskasten randseitig gesichert sind.

Eine definierte Zuhaltung der Druckentlastungklappen bei hoher Formsteifigkeit gegen Aufwölben wird weiterhin durch die Merkmale des Ansprüche 5 und 6 erreicht, während durch eine abwechselnde Schraub- und Nietverbindung der Befestigungsleisten der beiden Druckentlastungsklappen an den Gehäuseseitenwänden an den Schraubverbindungen ein besserer elektrischer Übergang zu dem übrigen geerdeten Metallgehäuse erreicht wird, als wenn die Befestigung nur durch Niete erfolgte.

Eine endseitige Aussteifung der Gehäuseseitenwände wird durch das Merkmal des Anspruches 8 erreicht, während durch das Merkmal des Anspruches 9, wonach die Durchführung der Anschlußschienen an der Trennwand zwischen Geräteraum und Anschlußraum sowie im Gehäuseboden zum Anschluß an einem Schienenverteiler oder dergleichen mit O-Ring-Dichtungen versehen sind, die in konisch abgeschrägte Ringnuten an den betreffenden Trenn- oder Bodenwänden rings um die Anschlußschienen eingelegt sind, sichergestellt wird, daß ein von Störlichtbögen herrührender Druckanstieg im Geräteraum sich nicht durch die Druchführungen an der Trennwand und am Anschluß an den Schienenverteilern unkontrolliert nach außen fortpflanzen kann. Erforderlichenfalls können auch beide Stirnwände des Schalt- oder Abgangskastens als Druckentlastungswände ausgebildet sein. Ein bevorzugtes Ausführungsbeispiel der Erfindung ist in der Zeichnung schematisch dargestellt. Es zeigen
- Fig. 1: einen Schalt- oder Abgangskasten für Niederspannungs-Schaltanlagen auf einem Schienenverteiler in perspektivischer Ansicht.
- Fig. 2: eine Seitenansicht des Schalt- oder Abgangskastens mit darin gestrichelt angedeuteten Geräten und Anschlußschienen,
- Fig. 3: eine weggebrochen dargestellte perspektivische Teilansicht einer strinseitigen Druckentlastungswand an einem solchen Schalt- oder Abgangskasten,
- Fig. 4: einen Teilschnitt durch die Druckentlastungswand gemäß Schnittlinie IV - IV von Fig. 3,
- Fig. 5: einen weiteren Teilschnitt durch eine solche Druckentlastungswand gemäß Schnittlinie V- V von Fig. 3,
- Fig. 6: eine teilweise weggebrochen dargestellte perspektivische Teilansicht der durch einen Störlichtbogen geöffneten Druckentlastungswand an einem solchen Schalt- oder Abgangskasten,
- Fig. 7: eine Draufsicht auf die geöffnete Druckentlastungswand in Richtung des Pfeiles VII von Fig. 6,
- Fig. 8: eine abgedichtet Druchführung einer Anschlußschiene durch eine Trennwand an einem solchen Schalt- oder Abgangskasten,
- Fig. 9: eine perspektivische Ansicht der Anschlußschiene von Fig. 8 mit einem darauf angeordneten O-Ring
- Fig. 10: eine perspektivische Ansicht von Anschlußschienen mit daran angeordneten O-Ringdichtung auf der Anschlußseite des Schalt- oder Abgangskasten zu einem Schienenverteiler oder dergleichen und
- Fig. 11: einen schematischen Schnitt durch die Abdichtungen der Anschlußschienen von Fig. 10.

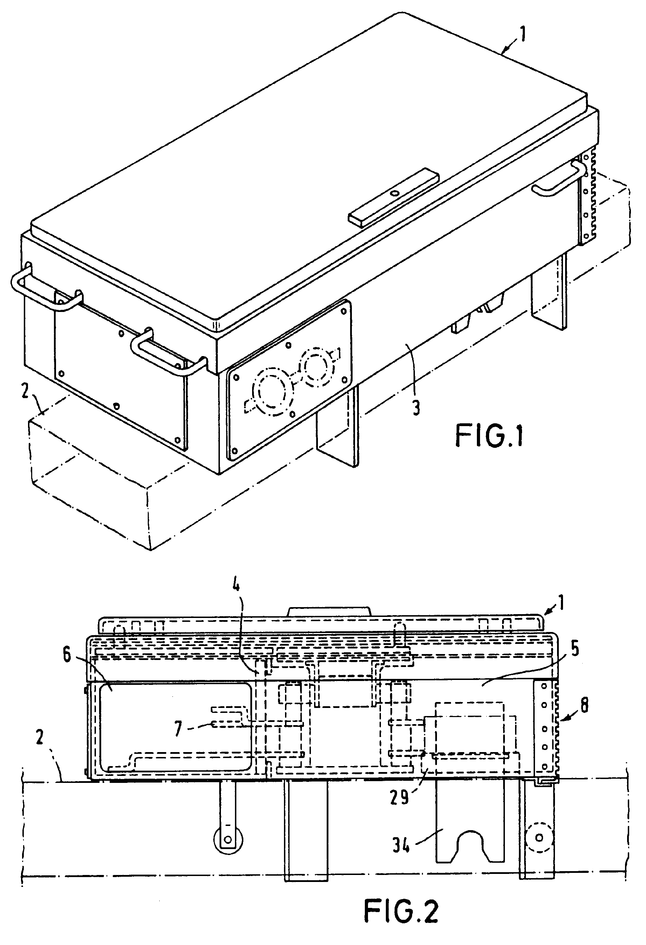

Der in Fig. 1 und 2 gezeigte Schalt- und Abgangskasten 1 ist insbesondere für eine Verwendung auf Schienenverteilern 2 von Niederspannungs-Schaltanlagen bestimmt und hat ein Metallgehäuse 3, das durch eine Trennwand 4 in einen Geräteraum 5 und in einen Anschlußraum 6 mit den zugehörigen Anschlußschienen 7 unterteilt ist.

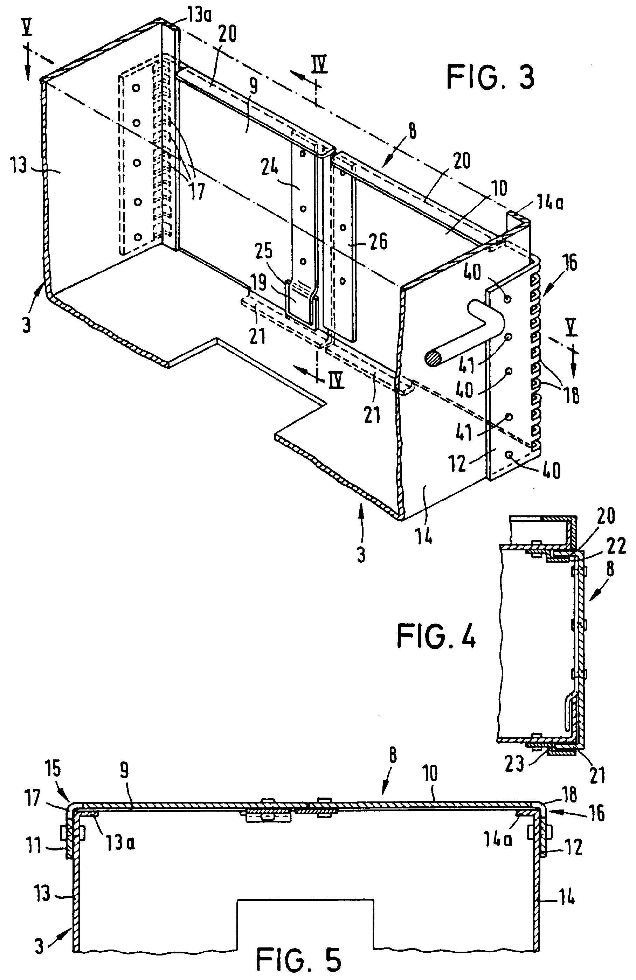

Wie in Fig. 3 bis 7 im einzelnen zu erkennen ist, ist bei einem solchen Schalt- oder Abgangskasten 1 an der Strinwand des Geräteraumes 5 eine zu der Trennwand parallele Druckentlastungswand 8 angeordnet, die aus zwei etwa in der Mitte der Stirnwand aneinanderstoßenden Druckentlastungsklappen 9, 10 besteht.

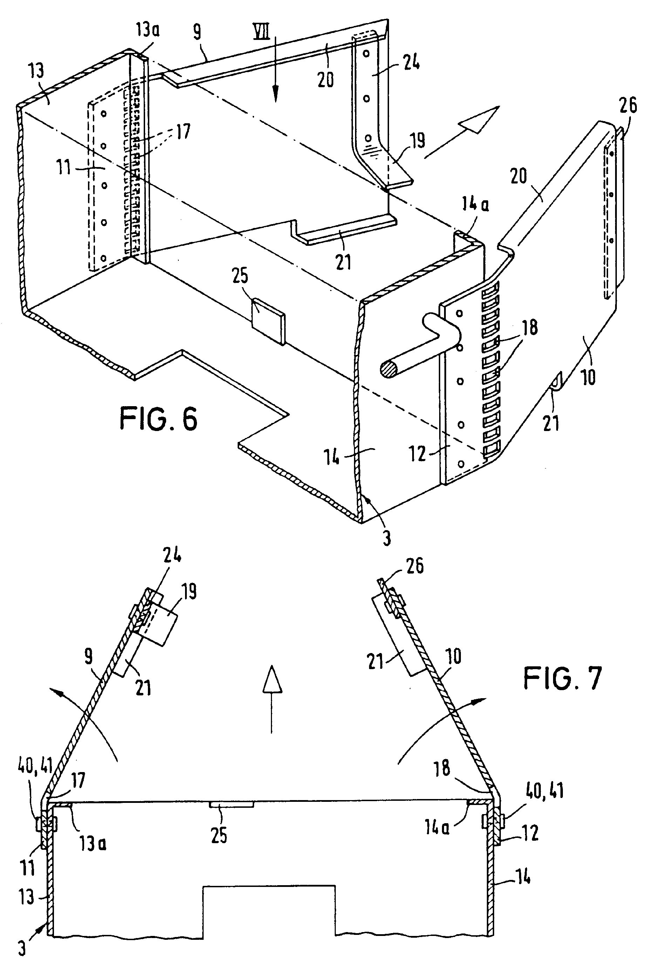

Jede Druckentlastungsklappe (9, 10) besteht aus einer ursprünglich ebenen und rechteckigen Blechplatte, wie in Fig. 6 dargestellt ist, die entlang einer parallel zu ihren Kanten verlaufenden Linie um einen Winkel von 90 Winkelgrade gebogen ist, wie aus der Fig. 3 ersichtlich ist. An den Druckentlastungsklappen 9, 10 entstehen somit Befestigungsleisten 11, 12, wobei jede Druckentlastungsklappe 9, 10 mit ihrer Befestigungsleiste 11, 12 derart am Gehäuse positioniert ist, daß jede Druckentlastungsklappe 9, 10 parallel zur Stirnwand liegt und die Befestigungsleiste 11, 12 parallel zur Gehäuseseitenwand 13, 14 befestigt ist, wie aus der Schnittdarstellung, Fig. 5, zu sehen ist. Entlang der Biegekanten 15, 16 zwischen den Druckentlastungsklappen 9,10 und deren Befestigungsleisten 11, 12 sind Perforationen als Schwächungszonen angeordnet, die in den Figuren 3 bis 7 mit den Bezugszeichen 17 und 18 bezeichnet sind.

Jede dieser beiden Druckentlastungsklappen 9, 10 ist also mit einer um 90° abgewinkelten Befestigungsleiste 11, 12 an der jeweils anschließenden Gehäuseseitenwand 13, 14 des Schalt- oder Abgangskastens 1 befestigt, und außerdem sind an den Biegekanten 15, 16 zwischen den beiden Druckentlastungsklappen 9, 10 und deren Befestigungsleisten 11, 12, wie bereits erläutert, Perforationen 17, 18 als Schwächungszonen vorhanden, die ein genau definiertes Aufklappen der Druckentlastungsklappen 9, 10 im Falle eines Störlichtbogens sicherstellen, ohne daß diese Aufklappbewegung durch Scharnierbänder oder dergleichen behindert würde.

Die Druckentlastungswand 8 hat eine besonders geringe Massenträgheit, wenn die Blechdickenur etwa 0,4- bis 0,6- fache der Blechdicke des Metallgehäuses 3 hat. Außerdem ist die Druckentlastungswand 8 auf der Innenseite metallisch blank bzw. elektrische leitend ausgebildet, und die Gehäuseseitenwände 13, 14 weisen abgewinkelte Randleisten 13a, 14a auf, die die Perforationen 17 an den Druckentlastungsklappen 9, 10 überdecken und für eine zusätzliche Aussteifung der Gehäuseseitenwände sorgen.

Wie insbesondere in Fig. 3 bis 7 im einzelnen zu erkennen ist, ist lediglich eine (9) der beiden Druckentlastungsklappen 9, 10 mittels einer Haltezunge 19 am Gehäuse 3 des Schalt- oder Abgangskastens 1 gesichert, während die zweite Druckentlastungsklappe 10 sich nur randseitig an der ersten Druckentlastungsklappe 9 abstützt.

Beide Druckentlastungsklappen 9, 10 haben an ihren Längskanten parallel zueinander abgewinkelte obere und untere Haltestege 20, 21, die unterschiedlich lang sind und mit denen sie in oberen und unteren seitlichen Führungstaschen oder Führungsschlitzen 22, 23 am Gehäuse 3 des Schalt- oder Abgangskastens 1 randseitig gesichert sind.

Die erste Druckentlastungsklappe 9 weist ferner eine parallel neben dem senkrechten mittigen Trennschlitz zwischen den beiden Klappen 9, 10 verlaufende Halteleiste 24 auf, die mit der parallel zur Befestigungsebene an der Druckentlastungsklappe 9 abgekröpften umbiegbaren Haltezunge 19 einen Widerlagersteg 25 an der Gehäusestirnwand haltend hintergreift, wohingegen die andere oder die zweite (10) der beiden Druckentlastungsklappen 9, 10 einen den Trennschlitz zwischen beiden Klappen überdeckende Leiste 26 trägt, mit der sie an der benachbarten ersten Druckentlastungsklappe 9 randseitig abgestützt ist.

Beide Druckentlastungsklappen 9, 10 sind mit ihren Befestigungsleisten 11, 12 an den Gehäuseseitenwänden 13, 14 jeweils durch abwechselnde Schraub- und Nietverbindungen 40, 41 (Fig. 3) befestigt, wobei die Schraubverbindungen so angeordnet sind, daß ein guter elektrischer Übergang zu dem geerdeten Metallgehäuse 3 erreicht wird. Außerdem erhalten die Gehäuseseitenwände 13, 14 durch die Befestigungsleisten 11, 12 eine zusätzliche Aussteifung, so daß der im Falle eines Störlichtbogens auftretende plötzliche Druckanstieg voll gegen die Druckentlastungsklappen wirksam wird und eine ebenso schlagartige Öffnung der Klappen bewirkt.

Die umgebördelten oberen und unteren Haltestege 20, 21 an den beiden Druckentlastungsklappen 9, 10 erstrecken sich jeweils von der Gehäusemitte zu den Gehäuseseitenwänden 13, 14 mindestens über einen Teil der Länge der Seitenkanten nach außen, wodurch insbesondere eine Aussteifung beider Druckentlastungsklappen 9, 10 im mittleren Teil der Gehäusestirnwand bzw. der Druckentlastungswand 8 erreicht und somit eine Aufwölbung der Druckentlastungsklappen vor der Öffnungsbewegung in einfacher Weise vermieden wird, während die Aufbiegung der Druckentlastungsklappen 9, 10 nach außen im Falle eines Störlichtbogen hierdurch nicht behindert wird.

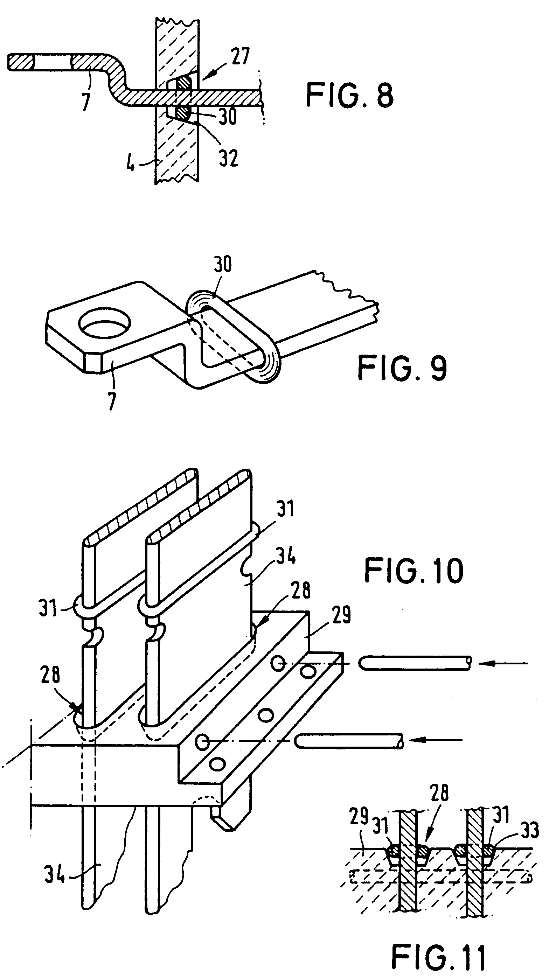

Wie in Fig. 8 bis 11 weiterhin zu erkennen ist, sind die Durchführungen 27, 28 der Anschlußschienen 7 an der Trennwand 4 zwischen Geräteraum 5 und Anschlußraum 6 sowie am Gehäuseboden 29 zum Anschluß an einen Schienenverteiler 2 oder dergleichen mit O-Ring-Dichtungen 30, 31 versehen, die in konisch abgeschrägte Ringnuten 32, 33 an den betreffenden Trenn- oder Bodenwänden 4, 29 rings um die Anschlußschienen 7, 34 eingelegt sind.

## Patentansprüche

1. Schalt- oder Abgangskasten (1), insbesondere zur Verwendung auf Schienenverteilern (2) von Niederspannungs-Schaltanlagen, mit einem Metallgehäuse, das durch eine Trennwand (4) in einen Geräteraum (5) und einen Anschlußraum (6) mit Anschlußschienen unterteilt ist und mindestens eine parallel zur Trennwand (4) angeordnete Druckentlastungswand (8) aufweist, wobei die Druckentlastungswand (8) an der Stirnwand des Geräteraumes (5) angeordnet ist und aus zwei Druckentlastungsklappen, (9, 10) besteht, die in der Mitte der Druckentlastungswand (8) aneinanderstoßen, dadurch gekennzeichnet, daß jede Druckentlastungsklappe (9, 10) aus einer ursprünglich ebenen und rechteckigen Blechplatte besteht, die entlang einer parallel zu ihren Kanten verlaufenden Linie um einen Winkel von 90 Winkelgrad gebogen ist, derart, daß an den Druckentlastungsklappen (9, 10) Befestigungsleisten (11,12) entstehen, daß jede Druckentlastungsklappe (9, 10) mit ihrer Befestigungsleiste (11, 12) derart am Metallgehäuse (3) positioniert ist, daß jede Druckentlastungsklappe (9,10) parallel zur Stirnwand liegt und die Befestigungsleiste (11,12) parallel zur Gehäuseseitenwand (13,14) befestigt ist, daß entlang der Biegekanten (15,16) zwischen den Druckentlastungsklappen (9,10) und deren Befestigungsleisten (11,12) Perforationen (17,18) als Schwächungszonen angeordnet sind, und daß die Druckentlentlastungswand (8) auf der Innenseite metallisch blank bzw. elektrisch leitend ist.

2. Schalt- oder Abgangskasten nach Anspruch 1, **dadurch ge****kennzeichnet**, daß die Druckentlastungwand (8) eine Blechdicke von etwa dem 0,4- bis 0,6- fachen, vorzugsweise von etwa dem 0,5-fachen der Blechdicke des Metallgehäuses (3) hat.

3. Schalt- oder Abgangskasten nach Anspruch 1 oder 2, **dadurch gekennzeichnet**, daß die Druckentlastungsklappen (9, 10) etwa in der Mitte der Druckentlastungswand (4) aneinanderstoßen, und daß lediglich einer der beiden Druckentlastungsklappen (9, 10) mittels einer Haltezunge (19) am Gehäuse (3) des Schalt- oder Abgangskastens (1) gesichert ist, während die zweite Druckentlastungsklappe (10) sich nur randseitig an der ersten Druckentlastungsklappe (9) abstützt.

4. Schalt- oder Abgangskasten nach einem der Ansprüche 1 bis 3, **dadurch gekennzeichnet**, daß die Druckentlastungsklappen (9, 10) mit an ihren Längskanten parallel zueinander abgewinkelten oberen und unteren Haltestegen (20, 21) in oberen und unteren seitlichen Führungstaschen oder Führungsschlitzen (22, 23) am Gehäuse (3) randseitig gesichert sind.

5. Schalt- oder Abgangskasten nach einem der Ansprüche 1 bis 4, **dadurch gekennzeichnet**, daß die erste Druckentlastungsklappe (9) eine parallel neben dem mittigen Trennschlitz zwischen den beiden Klappen verlaufende Halteleiste (24) aufweist, die mit der parallel zur Befestigungsebene an der Druckentlastungsklappe (9) abgekröpften umbiegbaren Haltezunge (19) einen Widerlagersteg (25) an der Gehäusestirnwand haltend hintergreift.

6. Schalt- oder Abgangskasten nach Anspruch 5, **dadurch gekennzeichnet**, daß die andere oder die zweite (10) der beiden Druckentlastungsklappen (9, 10) eine den Trennschlitz zwischen beiden Klappen überdeckende Leiste (26) aufweist, mit der sie an der benachbarten ersten Druckentlastungsklappe (9) randseitig abgestützt ist.

7. Schalt- oder Abgangskasten nach einem der Ansprüche 1 bis 6, **dadurch gekennzeichnet**, daß die Druckentlastungsklappen (9, 10) mit ihren Befestigungsleisten (11, 12) an den Gehäuseseitenwänden (13, 14) durch abwechselnde Schraub- und Nietverbindungen (40, 41) befestigt sind.

8. Schalt- oder Abgangskasten nach einem der Ansprüche 1 bis 7, **dadurch gekennzeichnet**, daß die Gehäuseseitenwände (13, 14) die Perforationen (17) an den Druckentlastungsklappen (9, 10) überdeckende abgewinkelte Randleisten (13a, 14a) aufweisen.

9. Schalt- oder Abgangskasten nach einem der Ansprüche 1 bis 8, **dadurch gekennzeichnet**, daß die Durchführungen (27, 28) der Anschlußschienen (7, 34) an der Trennwand (4) zwischen Geräteraum (5) und Anschlußraum (6) sowie am Gehäuseboden (29) zum Anschluß an einen Schienenverteiler (2) oder dergleichen mit O-Ring-Dichtungen (30, 31) versehen sind, die in konisch abgeschrägte Ringnuten (32, 33) an den betreffenden Trenn- oder Bodenwänden (4, 29) rings um die Anschlußschienen (7, 34) eingelegt sind.

10. Schalt- oder Abgangskasten nach einem der Ansprüche 1 bis 9, **dadurch gekennzeichnet**, daß beide Stirnwände des Schalt- oder Abgangskastens (1) als Druckentlastungswände (4) ausgebildet sind.

## Claims

1. Switch or outlet box (1) especially for use on the distributing bus bars (2) of low voltage switch gear comprising a metal casing which is divided into an instrument compartment (5) and a compartment for connections (6) with connecting bars by means of a partition wall (4)and presents at least one pressure relief wall (8) running parallel to partition wall (4), pressure relief wall (8) being located at the front wall of instrument compartment (5) and consisting of two pressure relief flaps (9, 10) which meet at the centre of pressure relief wall (8), **in which** every pressure relief flap (9, 10) consists of an originally flat and rectangular sheet metal plate bent at an angle of 90 angular degrees along a line running in parallel to its edges in such a way that fastening strips (11, 12) are created on the pressure relief flaps (9, 10), that every pressure relief flap (9, 10) is positioned on the metal casing (3) by means of fastening strips (11, 12) in such a way that every pressure relief flap (9, 10) is located in parallel to the front wall and that the fastening strip (11, 12) is fixed in parallel to the lateral casing wall (13, 14), that perforations (17, 18) are arranged to form weak zones along the bending sides (15, 16) between the pressure relief flaps (9, 10)and fastening strips (11, 12), and that the pressure relief wall (8) has a bare metallic surface or respectively is electrically conductive on its inner side.

2. Switch or outlet box as claimed in claim 1, **in which** the pressure relief wall (8) has a sheet thickness of approximately 0.4 to 0.6 times and preferably of approximately 0.5 times the sheet thickness of metal casing (3).

3. Switch or outlet box as claimed in claim 1 or 2, **in which** the pressure relief flaps (9, 10) meet approximately at the centre of pressure relief wall (8) and in which only one of the two pressure relief flaps (9, 10) is secured at the casing (3) of the switch or outlet box (1) by means of a holding section (19), while the second pressure relief flap (10) is only supported laterally on the first pressure relief flap (9).

4. Switch or outlet box as claimed in any claim 1 through 3, **in which** the pressure relief flaps (9, 10) are secured on their edges by means of upper and lower angles (20, 21) which are bent in parallel to one another along their longitudinal sides and fit into upper and lower lateral guiding pockets or guiding slots (22, 23) at the casing (3).

5. Switch or outlet box as claimed in any claim 1 through 4, **in which** the first pressure relief flap (9) presents a holding strip (24) which runs in parallel next to the central separating slot between both flaps and grips and holds behind a buttress fin (25) located at the front wall of the casing by means of a flexible holding section (19) bent at right angle.

6. Switch or outlet box as claimed in claim 5, **in which** the other or the second (10) of the two pressure relief flaps (9, 10) presents a strip (26) which covers the separating slot between the two flaps and gives this flap lateral support against the neighbouring first pressure relief flap (9).

7. Switch or outlet box as claimed in any claim 1 through 6, **in which** the pressure relief flaps (9, 10) are fixed to the lateral casing walls (13, 14) by means of fastenings strips (11, 12) using screwed connections and riveted joints in an alternating way.

8. Switch or outlet box as claimed in any claim 1 through 7, **in which** the lateral casing walls (13, 14) present bended lateral strips (13a, 14a) covering the perforations (17) on the pressure relief flaps (9, 10).

9. Switch or outlet box as claimed in any claim 1 through 8, **in which** the ducts (27,28) allowing the passage of the connecting bars (7, 34) on the partition wall (4) between instrument compartment (5) and connecting compartment (6) and allowing the connection with a distributing bus bar (2) or a similar device on the casing bottom (29) are provided with O-ring seals (30, 31) which are inserted into tapered ring grooves (32, 33) at the respective partition or bottom walls (4, 29) around the connecting bars (7, 34).

10. Switch or outlet box as claimed in any claim 1 through 9, **in which** both front walls of the switch or outlet box (1) are designed as pressure relief walls (4).

## Revendications

1. Coffret électrique ou de départ (1) destiné en particulier aux répartiteurs de barres omnibus (2) d'installations de commutation à basse tension comprenant un boîtier métallique séparé en un compartiment d'instruments (5) et en un compartiment de raccordement (6) contenant des barres de raccordement grâce à une cloison de séparation (4), boîtier présentant au moins une paroi de décharge de pression (8) parallèle à la cloison de séparation (4), la paroi de décharge de pression (8) étant aménagée à la paroi frontale du compartiment d'instruments (5) et consistant en deux clapets de décharge de pression (9, 10) qui se rencontrent au milieu de la paroi de décharge de pression (8), **caractérisé en ce que** chaque clapet de décharge de pression (9, 10) consiste en une plaque en tôle rectangulaire et plane à l'origine qui est pliée à un angle de 90 degrés d'angle le long d'une ligne parallèle à ses côtés de telle manière à ce que des bandes de fixation (11, 12) sont créées sur les clapets de décharge de pression (9, 10), que chaque clapet de décharge de pression (9, 10) est positionné sur le boîtier métallique (3) grâce à sa bande de fixation (11, 12) de telle sorte que chaque clapet de décharge de pression (9, 10) est parallèle à la paroi frontale et que la bande de fixation (11, 12) est fixée de façon parallèle à la paroi latérale du boîtier (13, 14), que des perforations (17, 18) sont aménagées créant des zones faibles le long des côtés de pliage (15, 16) entre les clapets de décharge de pression (9, 10) et leurs bandes de fixation (11, 12) et que la paroi de décharge de pression (8) a une surface intérieure métallique nue et électriquement conductible.

2. Coffret électrique ou de départ selon la revendication 1, **caractérisé en ce que** la paroi de décharge de pression (8) présente une épaisseur de la tôle d'un facteur allant d'à peu près 0,4 à 0,6 et s'élévant de préférence à un facteur d'à peu près 0,5 de l'épaisseur de la tôle du boîtier métallique (3).

3. Coffret électrique ou de départ selon la revendication 1 ou 2, **caractérisé en ce que** les clapets de décharge de pression (9, 10) se rencontrent approximativement au milieu de la paroi de décharge de pression (8) et que seulement un des deux clapets de décharge de pression (9, 10) est retenu au boîtier (3) du coffret électrique ou de départ (1) grâce à une languette d'arrêt (19), tandis que le deuxième clapet de décharge de pression (10) ne s'appuie que de façon latérale sur le premier clapet de décharge de pression (9).

4. Coffret électrique ou de départ selon l'une quelconque des revendications 1 à 3, **caractérisé en ce que** les clapets de décharge de pression (9, 10) sont maintenus de façon latérale grâce à des bandes de retenue (20, 21) inférieures et supérieures qui présentent des angles parallèles les uns aux autres sur leurs côtés longitudinaux et rentrent dans des poches ou des fentes de guidage latérales (22, 23) aménagées en haut et en bas sur le boîtier (3).

5. Coffret électrique ou de départ selon l'une quelconque des revendications 1 à 4, **caractérisé en ce que** le premier clapet de décharge de pression (9) présente une bande de retenue (24) qui s'étend de façon parallèle à côté de la fente verticale séparant les deux clapets au milieu, bande de retenue (24) qui s'accroche à une butée (25) prévue à la paroi frontale du boîtier grâce à la languette d'arrêt (19) pliable et courbée à un angle droit qui est prévue de façon parallèle au plan de fixation au clapet de décharge de pression (9)

6. Coffret électrique ou de départ selon la revendication 5, **caractérisé en ce que** l'autre ou le deuxième (10) des deux clapets de décharge de pression (9, 10) comporte une bande (26) qui recouvre la fente séparant les deux clapets, bande (26) grâce à laquelle ce clapet s'appuie de façon latérale au premier clapet de décharge de pression (9) avoisinant.

7. Coffret électrique ou de départ selon l'une quelconque des revendications 1 à 6, **caractérisé en ce que** les clapets de décharge de pression (9, 10) sont fixés aux parois latérales (13, 14) du boîtier par l'intermédiaire de leurs bandes de fixation (11, 12) et grâce à une alternance de raccords vissés et rivetés (40, 41).

8. Coffret électrique ou de départ selon l'une quelconque des revendications 1 à 7, **caractérisé en ce que** les parois latérales (13, 14) du boîtier présentent des bandes de côté angulaires (13a, 14a) qui recouvrent les perforations (17) des clapets de décharge de pression (9, 10).

9. Coffret électrique ou de départ selon l'une quelconque des revendications 1 à 8, **caractérisé en ce que** les passages (27, 28) destinés aux barres de raccordement (7, 34) à la cloison de séparation (4) entre le compartiment d'instruments (5) et le compartiment de raccordement (6) et à travers le fond (29) du boîtier permettant le raccordement à un répartiteur de barres omnibus (2) ou à un dispositif similaire sont munis d'étanchéités en forme d'anneau (30, 31) insérées dans des encoches annulaires (32, 33) à chanfrein conique aménagées autour des barres de raccordement (7, 34) passant par les cloisons de séparation ou de fond (4, 29) en question.

10. Coffret électrique ou de départ selon l'une quelconque des revendications 1 à 9, **caractérisé en ce que** les deux parois frontales du coffret électrique ou de départ (1) sont aménagées en parois de décharge de pression (4).
